# EUROPÄISCHE PATENTSCHRIFT

(11) **EP 0 534 313 B1**
(45) Veröffentlichungstag und Bekanntmachung des Hinweises auf die Patenterteilung: **28.12.1994**
(21) Anmeldenummer: 92115901.8
(22) Anmeldetag: 17.09.1992
(51) Int. Cl.: B60S 9/04, F16B 7/14, B66F 3/02

(54) **Längenveränderbare Stütze**
Extensible column
Dispositif de support extensible

(30) Priorität: 26.09.1991 DE 4132035
(43) Veröffentlichungstag der Anmeldung: 31.03.1993
(73) Patentinhaber: Linnepe, Kurt, D-58285 Gevelsberg (DE); Linnepe, Marcus, D-58285 Gevelsberg (DE)
(72) Erfinder: Linnepe, Kurt, D-58285 Gevelsberg (DE); Linnepe, Marcus, D-58285 Gevelsberg (DE)
(74) Vertreter: Köchling, Conrad, Dipl.-Ing.

(56) Entgegenhaltungen:
- DE-A- 2 409 012
- DE-B- 1 257 491
- DE-B- 2 630 446
- US-A- 2 153 722
- US-A- 2 918 257

## Beschreibung

Die Erfindung betrifft eine längenveränderbare Stütze, bestehend aus einem Stützrohr, einer in diesem teleskopartig verstellbaren ggf. hohlen Stange und einem an der Mündung des Stützrohres angeordneten Verstellkopf, in dem eine von außen betätigbare, drehbare Antriebsrolle gelagert ist, die unter der Wirkung der Last selbsthemmend zwischen der Lauffläche der Stange und schrägen Laufflächen des Verstellkopfes verkeilbar ist, in Richtung auf diese Keilstelle federbelastet ist, und in dem auf der Stange ablaufenden Abschnitt mit einer Verzahnung versehen ist, wobei am Verstellkopf ein Führungsorgan gelagert ist, welches an zwei, einander gegenüberliegenden Seiten des Verstellkopfes je einen zur Längserstreckung der Stütze etwa quer verlaufenden Führungsschlitz aufweist, in denen die Endteile der Antriebsrolle zueinander parallel geführt sind.

Eine derartige Stütze ist aus der DE 26 30 446 C2 bekannt.
Bei dieser Stütze wird die Antriebsrolle durch Federkraft zwischen die zueinander konvergierenden Laufflächen von Verstellkopf und Stange gedrängt, so daß zur Verlängerung der Stütze die Stange aus dem Stützrohr herausgezogen werden kann, während zum Verkürzen ohne Last die Antriebsrolle lediglich entgegen der Federkraft von der Lauffläche der Stange abgehoben werden muß.
Unter Last können aber mit der Stütze durch Drehen an der Antriebsrolle beträchtliche Kräfte ausgeübt werden.
Beim Drehen der Antriebsrolle unter Last graben sich in die Lauffläche der Stange Verzahnungen ein, die noch zu einem verbesserten Formschluß führen.

Grundsätzlich haben sich solche Stützen in der betrieblichen Praxis bewährt.
Sofern bei einer solchen Stütze allerdings ein Bruch der Antriebsrolle erfolgt, besteht eine erhebliche Unfallgefahr, da dann die unter Last stehende Stütze schlagartig zusammengefahren wird.

Ausgehend von dieser Problematik liegt der Erfindung die Aufgabe zugrunde, eine Stütze gattungsgemäßer Art zu schaffen, bei der ein Einfahren der Stange in das Stützrohr bei unter Last stehender Stütze auch dann verhindert ist, wenn die Antriebsrolle bricht.

Zur Lösung dieser Aufgabe schlägt die Erfindung vor, daß am Verstellkopf in einem das Stützrohr überragenden Bereich, der die verstellbare Stange nahe des Endes des Stützrohres umgibt, ein Klemmstück schwenk- oder drehbeweglich oder längsverschieblich gehaltert ist, welches unter Wirkung der Last selbsthemmend an einer Lauffläche der Stange verklemmbar und in Richtung der Klemmstelle federbelastet ist, und daß das Klemmstück mittels einer Handhabe aus der Klemmlage in eine Freigabelage verstellbar ist.

Durch die Anordnung des Klemmstückes ist erreicht, daß selbst dann, wenn die Antriebsrolle brechen sollte und die Stütze unter Last steht, ein selbständiges Einlaufen der Stange in das Stützrohr unterbunden ist.

Die Stange wird nämlich durch das Klemmstück in der entsprechenden Stützlage gehalten, so daß die an sich bestehende Unfallgefahr beseitigt ist.
Bei der normalen Benutzung der Stütze kann zur Verlängerung der Stütze, wenn diese nicht unter Last steht, die Stange aus dem Stützrohr manuell herausgezogen werden, wobei dann das Klemmstück unwirksam ist, da es durch die Stange entgegen der Klemmrichtung belastet ist.
Zum Verkürzen der Stütze im unbelasteten oder auch im belasteten Zustand mittels Betätigung der Antriebsrolle ist es erforderlich, das Klemmstück mittels einer Handhabe aus der Klemmlage in eine Freigabelage zu verschwenken, zu verstellen oder zu verdrehen, so daß die Stange in die Stütze eingefahren werden kann.

Eine mögliche Variante wird darin gesehen, daß das Klemmstück als Exzenter ausgebildet ist.

Eine bevorzugte Variante wird darin gesehen, daß das Klemmstück als verschiebbarer oder schwenkbarer Keil ausgebildet ist.

Dabei ist die verschwenkbare Anordnung des Keiles bevorzugt.
Desweiteren ist bevorzugt vorgesehen, daß das Klemmstück in Seitenwangen des das Stützrohr überragenden Bereichs des Verstellkopfes mit Achsstummeln dreh- oder schwenkbeweglich gehalten ist.

Desweiteren ist bevorzugt vorgesehen, daß der überragende Bereich die Stange hülsenartig umgreift und die Seitenwangen zu einer Kappenform ergänzt sind, wobei die Kappe einen Durchgriffsschlitz für das der Klemmstelle abgewandte Ende des Klemmstückes aufweist, welches Ende mit einer aufsteckbaren Handhabe kuppelbar ist, und die dem Verstellkopf abgewandte Stirnfläche der Kappe eine auf das Klemmstück einwirkende Vorspannfeder haltert.

Der überragende Bereich kann als selbständiges Bauteil ausgebildet und angeordnet und mit dem Verstellkopf verbunden sein oder aber er kann auch einstückig mit dem Verstellkopf ausgebildet sein.
Es ist auf diese Weise möglich, auch bestehende Stützen derart gemäß DE-B-26 30 446 C2 nachträglich mit der Keilsicherung auszurüsten.

Eine bevorzugte Weiterbildung wird darin gesehen, daß das Klemmstück als im Querschnitt rechteckiger, insbesondere quadratischer Bolzen ausgebildet ist, dessen eine Stirnrandkante parallel zur Lauffläche der Stange gerichtet ist und federbelastet gegen diese angelegt gehalten ist, wobei der Bolzen derart geneigt zur Lauffläche gerichtet ist, daß bei aufliegender Last die Stirnrandkante sich an der Lauffläche zunehmend verkeilt.

Desweiteren ist bevorzugt vorgesehen, daß am der Lauffläche abgewandten Bereich des Klemmstückes, insbesondere am Bolzenende, eine Ausnehmung ausgebildet ist, in die das passend geformte Ende einer stangenförmigen Handhabe einsetzbar ist.

Die Handhabe kann stangenförmig ausgebildet und mit einem Griffstück versehen sein.
Desweiteren kann diese Handhabe mittels einer Kette oder dergleichen am Verstellkopf oder einem anderen Bauteil befestigt sein.

Eine bevorzugte Weiterbildung einer Stütze, wobei das Führungsorgan als Gabel ausgebildet ist, die am Verstellkopf um eine rechtwinklig zur Rohrachse und parallel zum Gabelsteg verlaufende Achse verschwenkbar angelenkt ist, in deren Gabelschenkel die Führungsschlitze angeordnet sind und das Federelement zur Belastung der Antriebsrolle am Führungsorgan angreift, wird darin gesehen, daß die Gabelschenkel über die Mündung des Stützrohres hinausragend verlängert sind, das Klemmstück um eine zur Schwenkachse der Gabel parallele Achse schwenkbar ist und aus den Seitenwangen des den Verstellkopf überragenden Bereiches in Bewegungsschlitzen austretende, bolzenartige Ansätze aufweist, die von den Verlängerungen der Gabelschenkel untergriffen sind, so daß bei Verschwenkung der Gabel im Sinne des Freigebens der Verkeilung zwischen Antriebsrolle und Stange gleichzeitig das Klemmstück aus der Klemmlage in eine Freigabeposition verschwenkbar ist.

Durch diese Ausbildung ist es möglich, allein durch Betätigung des Führungsorganes sowohl die Antriebsrolle außer Eingriff zu bringen, als auch das Klemmstück von der Korrespondenzfläche der Stange abzuheben.

Am Führungsorgan kann dabei eine hebelartige Verstellhandhabe angeordnet sein, die vorzugsweise lösbar an dieser befestigt, insbesondere steckbefestigt ist.
Beispielsweise kann dazu der Gabelsteg eine Ausnehmung (Sackloch oder dergleichen) aufweisen, in die das freie Ende der stangenartigen Verstellhandhabe einsteckbar ist, die dann an einem entsprechenden Griffteil betätigbar ist.
Sofern die Verstellhandhabe manuell nicht mehr erfaßt wird, gleitet sie selbständig oder ggf. durch eine in der Ausnehmung befindliche Auswerffeder unterstützt aus der Ausnehmung des Gabelsteges heraus, so daß die Gefahr einer ungewollten Betätigung unterbunden ist.

Eine bevorzugte Variante wird darin gesehen, daß ein in den Spalt zwischen der dem Stützrohr abgewandten Ende des Verstellkopfes und der Wandung der verstellbaren Stange ein keilförmiges Klemmstück parallel zur verstellbaren Stange längsverschieblich gehaltert ist.

Dabei ist bevorzugt vorgesehen, daß am sich keilförmig erweiternden Ende des Klemmstückes das eine Ende einer bügelartigen Feder gehalten ist, deren anderes Ende nahe der Antriebsrolle gehaltert ist und daß die bügelartige Feder aus einer Sperrlage, in welcher das Klemmstück in den Klemmspalt gedrängt ist und in der der Federbügel bogenartig mit Abstand den Verstellkopf umgreift, entgegen seiner Federkraft in eine Freigabelage drängbar ist, in welcher das Klemmstück aus dem Klemmspalt zurückgezogen und der Federbügel dem Verstellkopf angenähert ist, so daß der Abstand zwischen dem fest gehalterten Bügelende und dem Haltebereich des Klemmstückes größer als in der Sperrlage ist.

Ein Ausführungsbeispiel der Erfindung ist in der Zeichnung dargestellt und im folgenden näher beschrieben.

Es zeigt:
- Fig. 1: eine längenveränderbare Stütze in Seitenansicht bei horizontaler Anordnung der Stütze;
- Fig. 2: desgleichen von oben gesehen, allerdings nur ausschnittsweise;
- Fig. 3: ein Detail der Figur 1 in vergrößerter Darstellung im Schnitt gesehen.

Die längenveränderbare Stütze besteht im wesentlichen aus einem Stützrohr 1 mit Fußplatte 2 und einer in diesem teleskopartig verstellbaren hohlen Stange 3, die ebenfalls durch eine Fußplatte 4 verschlossen ist.
Im Querschnitt sind das Stützrohr 1 und die Stange 3 quadratisch profiliert.

Ferner ist ein an der Mündung des Stützrohres 1 angeordneter Verstellkopf 5 vorgesehen, in dem eine von außen betätigbare drehbare Antriebsrolle 6 mit Antriebsvielkant 7 drehbar gelagert ist, die unter der Wirkung der Last selbsthemmend zwischen der Lauffläche der Stange 3 und schrägen Laufflächen des Verstellkopfes 5 verkeilbar ist.
Diese Antriebsrolle 6 ist in Richtung auf die Keilstelle federbelastet.
In dem auf der Stange 3 ablaufenden Abschnitt ist die Antriebsrolle 6 mit einer Verzahnung versehen.
Diese Verzahnung gräbt sich unter Lastangriff in die Oberfläche der Stange 3 ein.
Am Verstellkopf 5 ist zusätzlich ein Führungsorgan 8 gelagert, welches an zwei, einander gegenüberliegenden Seiten des Verstellkopfes 5 je einen zur Längserstreckung der Stütze etwa quer verlaufenden Führungsschlitz 9 aufweist, in denen die Endteile der Antriebsrolle 6 zueinander parallel geführt sind.
Am Verstellkopf 5 ist in einem das Stützrohr 1 in der Zeichnung nach links überragendem Bereich 10, der die verstellbare Stange 3 nahe des Endes des Stützrohres 1 umgibt, ein Klemmstück 11 schwenk- oder drehbeweglich gehaltert, welches unter der Wirkung der Last selbsthemmend an einer Lauffläche der Stange 3 verklemmbar und in Richtung der Klemmstelle 19 durch eine Schraubendruckfeder 12 federbelastet ist.

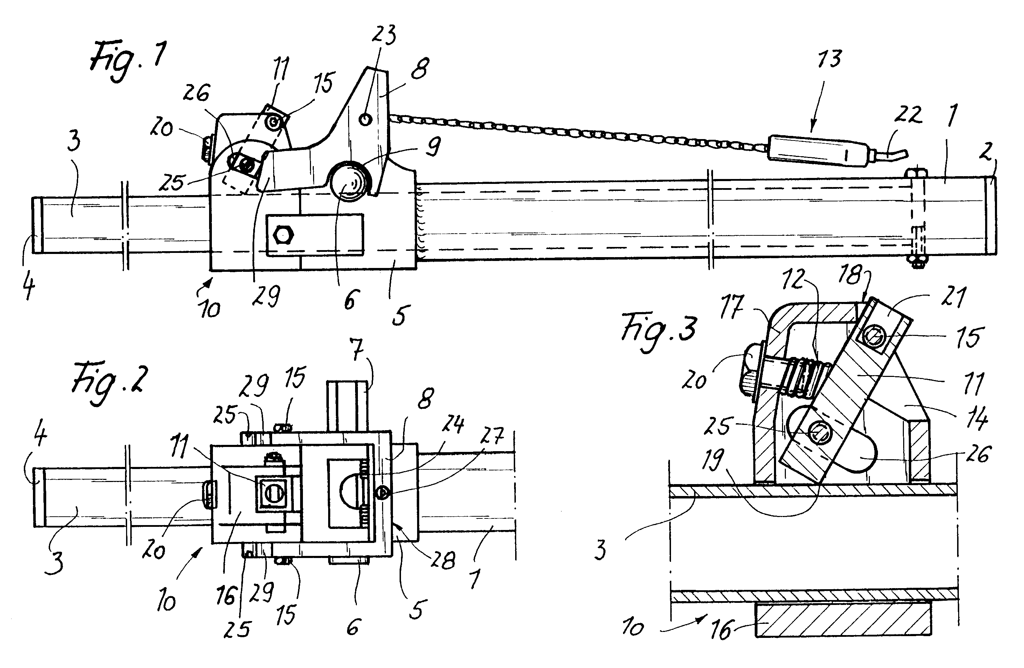

Das Klemmstück 11 ist mittels einer Handhabe 13 aus der Klemmlage, die insbesondere in Figur 3 ersichtlich ist, in eine Freigabelage verschwenkbar, in der die Klemmkante des Klemmstückes 11 Abstand von der entsprechenden Klemmfläche der Stange 3 aufweist.
Im Ausführungsbeispiel ist das Klemmstück 11 als verschwenkbarer Keil ausgebildet.
Das Klemmstück 11 ist in Seitenwangen 14 des das Stützrohr 1 überragenden Bereichs 10 des Verstellkopfes 5 mit Achsstummeln 15 dreh- bzw. schwenkbeweglich gehalten.
Der überragende Bereich 10 umgreift die Stange 3 dabei in Form einer Hülse 16, wobei die Seitenwangen 14 Bestandteil der Hülse 16 sind.
Insgesamt ist die Hülse 16 zu einer Kappenform ergänzt, wobei die Kappe 17 einen Durchgriffsschlitz 18 für das der Klemmstelle 19 abgewandte Ende des Klemmstückes 11 aufweist, welches Ende mit einer aufsteckbaren Handhabe 13 kuppelbar ist.

Die dem Verstellkopf 5 abgewandte Stirnfläche der Kappe 17 weist die mittels einer Stellschraube 20 vorspannbare Vorspannfeder 12 auf, die durch die Stellschraube 20 an der Stirnfläche der Kappe 17 gehaltert ist.
Das freie Ende der Feder 12 stützt sich auf der Flanke des Klemmstückes 11 ab und drängt dieses in die Klemmposition, die in Figur 3 insbesondere deutlich dargestellt ist.

Zur Kupplung der Handhabe 13 weist das Klemmstück 11 an seinem der Klemmstelle 19 abgewandten Ende eine Ausnehmung 21 auf, in die das Ende 22 der Handhabe eingesteckt werden kann.
In dieser Position ist das Klemmstück 11 um die durch die Achsstummel 15 gebildete Achse in der Zeichnungsfigur 3 im Uhrzeigersinn verschwenkbar, um die Keilkante von der entsprechenden Korrespondenzfläche der Stange 3 abzuheben und somit die Klemmung aufzuheben.

Das Klemmstück 11 ist als im Querschnitt quadratischer Bolzen ausgebildet, dessen eine Stirnrandkante (bei 19) zur Lauffläche der Stange 3 gerichtet und federbelastet gegen diese angelegt gehalten ist, wobei der Bolzen derart geneigt zur Lauffläche der Stange 3 gerichtet ist, daß bei aufliegender Last die Stirnrandkante (bei 19) sich an der Lauffläche der Stange 3 zunehmend verkeilt.

Das Führungsorgan 8 ist als Gabel ausgebildet, die am Verstellkopf 5 um eine rechtwinklig zur Rohrachse und parallel zum Gabelsteg verlaufende Achse 23 verschwenkbar angelenkt ist.
In deren Gabelschenkeln sind die Führungsschlitze 9 angeordnet.
Das Federelement 29 zur Belastung der Antriebsrolle 6 greift am Führungsorgan 8 an.
Die Gabelschenkel sind über die Mündung des Stützrohres 1 hinausragend verlängert.
Die Verlängerung ist mit 24 bezeichnet.
Das Klemmstück 11 ist um die zur Schwenkachse 23 der Gabel parallele Achse 15 schwenkbar und weist aus den Seitenwangen des den Verstellkopf 5 überragenden Bereiches 10 austretende, bolzenartige Ansätze 25 auf, die in Bewegungsschlitzen 26 der Seitenwangen 14 die Seitenwangen nach außen überragend austreten.
Diese bolzenartigen Ansätze 25 sind von den Verlängerungen 24 der Gabelschenkel untergriffen, so daß bei Verschwenkung der Gabel im Sinne des Freigebens der Verkeilung zwischen Antriebsrolle 6 und Stange 3 gleichzeitig das Klemmstück 11 aus der Klemmlage gemäß Figur 3 in eine Freigabeposition verschwenkt wird.

Am Führungsorgan 8 ist eine hebelartige Verstellhandhabe angeordnet, die identisch mit der Verstellhandhabe 13 für das Klemmstück 11 ist.
Diese Verstellhandhabe 13 kann entweder in die Ausnehmung 21 des Klemmstückes 11 zu dessen Betätigung eingesetzt werden, oder aber sie kann in eine entsprechende Ausnehmung 27 am Gabelsteg 28 eingeführt werden, um die Gabel und gleichzeitig das Klemmstück 11 zu betätigen.
Auch hierbei ist wieder die Verstellhandhabe 13 lösbar am Gabelsteg 28 befestigt, insbesondere steckbefestigt, und zwar in einer Art und Weise, wie sie hinsichtlich der Befestigung am Klemmstück 11 vorher beschrieben ist.

## Patentansprüche

1. Längenveränderbare Stütze (1), bestehend aus einem Stützrohr, einer in diesem teleskopartig verstellbaren ggf. hohlen Stange (3) und einem an der Mündung des Stützrohres angeordneten Verstellkopf (5), in dem eine von außen betätigbare, drehbare Antriebsrolle (6) gelagert ist, die unter der Wirkung der Last selbsthemmend zwischen der Lauffläche der Stange (3) und schrägen Laufflächen des Verstellkopfes (5) verkeilbar ist, in Richtung auf diese Keilstelle federbelastet ist, und in dem auf der Stange (3) ablaufenden Abschnitt mit einer Verzahnung versehen ist, wobei am Verstellkopf (5) ein Führungsorgan (8) gelagert ist, welches an zwei, einander gegenüberliegenden Seiten des Verstellkopfes je einen zur Längserstreckung der Stützen etwa quer verlaufenden Führungsschlitz (9) aufweist, in denen die Endteile der Antriebsrolle (6) zueinander parallel geführt sind, **dadurch gekennzeichnet**, daß am Verstellkopf (5) in einem das Stützrohr (1) überragenden Bereich (10), der die verstellbare Stange (3) nahe des Endes des Stützrohres (1) umgibt, ein Klemmstück (11) schwenk- oder drehbeweglich oder längsverschieblich gehaltert ist, welches unter der Wirkung der Last selbsthemmend an einer Lauffläche der Stange (3) verklemmbar und in Richtung der Klemmstelle (19) federbelastet ist, und daß das Klemmstück mittels einer Handhabe (13) aus der Klemmlage in eine Freigabelage verstellbar ist.

2. Stütze nach Anspruch 1, **dadurch gekennzeichnet,** daß das Klemmstück (11) als Exzenter ausgebildet ist.

3. Stütze nach Anspruch 1, **dadurch gekennzeichnet**, daß das Klemmstück (11) als verschiebbarer oder schwenkbarer Keil ausgebildet ist.

4. Stütze nach einem der Ansprüche 1 bis 3, **dadurch gekennzeichnet,** daß das Klemmstück (11) in Seitenwangen (14) des das Stützrohr (1) überragenden Bereichs (10) des Verstellkopfes (5) mit Achsstummeln (15) dreh- oder schwenkbeweglich gehalten ist.

5. Stütze nach einem der Ansprüche 1 bis 4, **dadurch gekennzeichnet**, daß der überragende Bereich (10) die Stange (3) hülsenartig umgreift und die Seitenwangen (14) zu einer Kappenform ergänzt sind, wobei die Kappe (17) einen Durchgriffsschlitz (18) für das der Klemmstelle (19) abgewandte Ende des Klemmstückes (11) aufweist, welches Ende mit einer aufsteckbaren Handhabe (13) kuppelbar ist, und die dem Verstellkopf (5) abgewandte Stirnfläche der Kappe (17) eine auf das Klemmstück (11) einwirkende Vorspannfeder (12) haltert.

6. Stütze nach einem der Ansprüche 1, 3 bis 5, **dadurch gekennzeichnet,** daß das Klemmstück (11) als im Querschnitt rechteckiger, insbesondere quadratischer, Bolzen ausgebildet ist, dessen eine Stirnrandkante parallel zur Lauffläche der Stange (3) gerichtet ist und federbelastet gegen diese angelegt gehalten ist, wobei der Bolzen derart geneigt zur Lauffläche gerichtet ist, daß bei aufliegender Last die Stirnrandkante sich an der Lauffläche zunehmend verkeilt.

7. Stütze nach einem der Ansprüche 1 bis 6, **dadurch gekennzeichnet,** daß am der Lauffläche abgewandten Bereich des Klemmstückes (11), insbesondere am Bolzenende, eine Ausnehmung (21) ausgebildet ist, in die das passend geformte Ende (22) einer stangenförmigen Handhabe (13) einsetzbar ist.

8. Stütze nach einem der Ansprüche 1 bis 7, wobei das Führungsorgan (8) als Gabel ausgebildet ist, die am Verstellkopf (5) um eine rechtwinklig zur Rohrachse und parallel zum Gabelsteg (28) verlaufende Achse (23) verschwenkbar angelenkt ist, in deren Gabelschenkeln die Führungsschlitze (9) angeordnet sind, und das Federelement (29) zur Belastung der Antriebsrolle (6) am Führungsorgan (8) angreift, **dadurch gekennzeichnet,** daß die Gabelschenkel über die Mündung des Stützrohres (1) hinausragend verlängert sind, das Klemmstück (11) um eine zur Schwenkachse (23) der Gabel parallele Achse (15) schwenkbar ist und aus den Seitenwangen (14) des den Verstellkopf (5) überagenden Bereiches (10) in Bewegungsschlitzen (26) austretende, bolzenartige Ansätze (25) aufweist, die von den Verlängerungen (24) der Gabelschenkel untergriffen sind, so daß bei Verschwenkung der Gabel im Sinne des Freigebens der Verkeilung zwischen Antriebsrolle (6) und Stange (3) gleichzeitig das Klemmstück (11) aus der Klemmlage in eine Freigabeposition verschwenkbar ist.

9. Stütze nach einem der Ansprüche 1 bis 8, wobei am Führungsorgan (8) eine hebelartige Verstellhandhabe (13) angeordnet ist, **dadurch gekennzeichnet,** daß die Verstellhandhabe (13) lösbar befestigt, insbesondere steckbefestigt ist.

10. Stütze nach Anspruch 1 oder 3, **dadurch gekennzeichnet, daß** ein in den Spalt zwischen der dem Stützrohr (1) abgewandten Ende des Verstellkopfes (5) und der Wandung der verstellbaren Stange (3) ein keilförmiges Klemmstück (11) parallel zur verstellbaren Stange (3) längsverschieblich gehaltert ist.

11. Stütze nach Anspruch 10, **dadurch gekennzeichnet, daß** am sich keilförmig erweiternden Ende des Klemmstückes (11) das eine Ende einer bügelartigen Feder gehalten ist, deren anderes Ende nahe der Antriebsrolle (6) gehaltert ist und daß die bürgelartige Feder aus einer Sperrlage, in welcher das Klemmstück (11) in den Klemmspalt gedrängt ist und in der der Federbügel bogenartig mit Abstand den Verstellkopf umgreift, entgegen seiner Federkraft in eine Freigabelage drängbar ist, in welcher das Klemmstück (11) aus dem Klemmspalt zurückgezogen und der Federbügel dem Verstellkopf angenähert ist, so daß der Abstand zwischen dem fest gehalterten Bügelende und dem Haltebereich des Klemmstückes größer als in der Sperrlage ist.

## Claims

1. Extensible column (1), consisting of a support tube, an optionally hollow rod (3) which is telescopically adjustable in the latter and an adjustable head (5) arranged at the opening of the support tube, in which a rotatable drive roller (6) which can be actuated from the outside is mounted, wherein this drive roller can be wedged in a self-locking manner by the action of the load between the running surface of the rod (3) and inclined running surfaces of the adjustable head (5), is spring-loaded in the direction of this wedge point and is provided with toothing in the section running on the rod (3), a guide member (8) being mounted on the adjustable head (5) and having respective guide slots (9) extending approximately transversely to the longitudinal direction of the columns on two opposing sides of the adjustable head, in which the end parts of the drive roller (6) are guided in parallel to one another, characterised in that a clamp (11) is supported in a pivotable or rotatable or longitudinally displaceable manner in a region (10) of the adjustable head (5) projecting beyond the support tube (1) which surrounds the adjustable rod (3) close to the end of the support tube (1), wherein said clamp can be jammed in a self-locking manner by the action of the load against a running surface of the rod (3) and is spring-loaded in the direction of the clamping paint (19), and that the clamp can be displaced from the clamping position into a release position by means of a handle (13).

2. Column according to claim 1, characterised in that the clamp (11) is eccentric.

3. Column according to claim 1, characterised in that the clamp (11) is a displaceable or pivotable wedge.

4. Column according to one of claims 1 to 3, characterised in that the clamp (11) is held in a rotatable or pivotable manner by means of axle journals (15) in side walls (14) of the region (10) of the adjustable head (5) projecting beyond the support tube (1).

5. Column according to one of claims 1 to 4, characterised in that the projecting region (10) surrounds the rod (3) like a sleeve and the side walls (14) are expanded to form a cap shape, the cap (17) having a through slot (18) for the end of the clamp (11) remote from the clamping point (19), wherein this end can be coupled to a detachable handle (13), and the end face of the cap (17) remote from the adjustable head (5) supports a biasing spring (12) acting on the clamp (11).

6. Column according to one of claims 1, 3 to 5, characterised in that the clamp (11) is a bolt having a rectangular, in particular, square cross section, one end edge of which is directed parallel to the running surface of the rod (3) and is held against the latter in a spring-loaded manner, the bolt being inclined towards the running surface in such a manner that the end edge is wedged increasingly against the running surface when load is applied.

7. Column according to one of claims 1 to 6, characterised in that a recess (21) into which the correspondingly shaped end (22) of a rod-shaped handle (13) can be inserted is formed on the region of the clamp (11) remote from the running surface, in particular at the end of the bolt.

8. Column according to one of claims 1 to 7, in which the guide member (8) is a fork which is hinged on to the adjustable head (5) so that it can swivel about an axis (23) extending at right angles to the axis of the tube and parallel to the web (28) of the fork, the guide slots (9) being arranged in the branches of the fork, and the spring element (29) acts upon the guide member (8) in order to load the drive roller (6), characterised in that the branches of the fork are extended so that they project beyond the opening of the support tube (1), the clamp (11) can pivot about an axis (15) parallel to the pivot axis (23) of the fork and has bolt-like projections (25) which emerge from the side walls (14) of the region (10) projecting beyond the adjustable head (5) in movement slots (26) and are engaged from below by the extensions (24) of the branches of the fork so that, when the fork is swivelled by releasing the wedging between the drive roller (6) and the rod (3), the clamp (11) can be swivelled simultaneously from the clamping position into a release position.

9. Column according to one of claims 1 to 8, in which a lever-like adjustable handle (13) is arranged on the guide member (8), characterised in that the adjustable handle (13) is removably secured, in particular in a plug-in manner.

10. Column according to claim 1 or claim 3, characterised in that a wedge-shaped clamp (11) is supported in a longitudinally displaceable manner parallel to the adjustable rod (3) in the gap between the end of the adjustable bead (5) remote from the support tube (1) and the wall of the adjustable rod (3).

11. Column according to claim 10, characterised in that one end of a stirrup-shaped spring is held at the end of the clamp (11) enlarged in a wedge-shaped manner, the other end of which is supported close to the drive roller (6) and that the stirrup-shaped spring can be urged from a locking position, in which the clamp (11) is urged into the clamping gap and in which the spring stirrup surrounds the adjustable head at a distance in an arcuate manner, against its spring force into a release position, in which the clamp (11) is removed from the clamping gap and the spring stirrup is moved towards the adjustable head so that the distance between the fixedly supported stirrup end and the holding region of the clamp is greater than it is in the locking position.

## Revendications

1. Etai à longueur variable (1), constitué par un tube d'appui, par une tige (3), éventuellement creuse, qui peut être déplacée dans ce tube d'une manière télescopique et par une tête de déplacement (5) qui est disposée à l'embouchure du tube d'appui et dans laquelle est monté un rouleau de commande tournant (6) qui peut être actionné depuis l'extérieur, qui peut se coincer par auto-blocage sous l'effet de la charge entre la surface de glissement de la tige (3) et des surfaces de glissement obliques de la tête de déplacement (5), qui est rappelé élastiquement dans la direction de cet endroit de coincement et qui est pourvu d'une denture sur sa partie en roulement sur la tige (3), cependant qu'est monté sur la tête de déplacement (5) un organe de guidage (8) qui présente, sur chacun de deux côtés opposés entre eux de la tête de déplacement, une fente de guidage (9) s'étendant à peu près transversalement par rapport à la direction longitudinale de l'étai, les extrémités du rouleau de commande (6) étant guidées parallèlement entre elles dans ces fentes, caractérisé par le fait qu'une pièce de serrage (11) est maintenue sur la tête de déplacement (5) en étant mobile en pivotement ou en rotation ou en pouvant coulisser dans la direction longitudinale, et ce, dans une région (10) qui fait saillie au-delà du tube d'appui (1) et qui entoure la tige réglable (3) au voisinage de l'extrémité du tube d'appui (1), et qu'elle peut se coincer par auto-blocage sous l'effet de la charge sur une surface de glissement de la tige (3) en étant rappelée élastiquement dans la direction de l'endroit du serrage (19), et par le fait que la pièce de serrage peut être déplacée au moyen d'un organe manuel de déplacement (13) depuis la position de serrage jusqu'à une position de dégagement.

2. Etai selon la revendication 1, caractérisé par le fait que la pièce de serrage (11) est réalisée sous la forme d'un excentrique.

3. Etai selon la revendication 1, caractérisé par le fait que la pièce de serrage (11) est réalisée sous la forme d'un coin coulissant ou pivotant.

4. Etai selon l'une des revendications 1 à 3, caractérisé par le fait que la pièce de serrage (11) est maintenue par des tourillons (15) en pouvant tourner ou pivoter dans des joues latérales (14) de la région (10) de la tête de déplacement (5) qui fait saillie au-delà du tube d'appui (1).

5. Etai selon l'une des revendications 1 à 4, caractérisé par le fait que la région en saillie (10) entoure la tige (3) à la manière d'un manchon, et que les joues latérales (14) sont complétées pour former un capuchon, cependant que ce capuchon (17) présente une fente de passage (18) destinée à l'extrémité de la pièce de serrage (11) qui est opposée à l'endroit du serrage (19), cette extrémité pouvant être accouplée à un organe manuel de déplacement à enfoncer (13), et que la surface frontale du capuchon (17) opposée à la tête de déplacement (5) maintient un ressort de rappel (12) qui agit sur la pièce de serrage (11).

6. Etai selon l'une des revendications 1 et 3 à 5, caractérisé par le fait que la pièce de serrage (11) est réalisée sous la forme d'un goujon à section transversale rectangulaire, et en particulier carrée, dont une arête frontale est dirigée parallèlement à la surface de glissement de la tige (3) en étant maintenue en appui sur celle-ci sous l'effet d'un ressort, cependant que le goujon est dirigé en étant incliné par rapport à la surface de glissement d'une manière telle que l'arête frontale se coince de plus en plus sur la surface de glissement lorsque la charge est appliquée.

7. Etai selon l'une des revendications 1 à 6, caractérisé par le fait qu'un évidement (21) est ménagé dans la région de la pièce de serrage (11) qui est opposée à la surface de glissement, et en particulier dans l'extrémité du goujon, et que l'extrémité (22) d'un organe manuel de déplacement en forme de tige (13) peut être introduite dans cet évidement avec une conjugaison des formes.

8. Etai selon l'une des revendications 1 à 7, dans lequel l'organe de guidage (8) est réalisé sous la forme d'un étrier qui est articulé en pivotement sur la tête de déplacement (5) autour d'un axe (23) s'étendant perpendiculairement à l'axe du tube et parallèlement à la semelle (28) de l'étrier, et dans les ailes duquel sont ménagées les fentes de guidage (9), cependant que l'élément élastique (24) destiné à agir sur le rouleau de commande (6) vient en prise avec l'organe de guidage (8), caractérisé par le fait que les ailes de l'étrier se prolongent en faisant saillie au-delà de l'embouchure du tube d'appui (1), que la pièce de serrage (11) peut pivoter autour d'un axe (15) parallèle à l'axe de pivotement (23) de l'étrier, et qu'elle présente des prolongements (25) en forme de tourillons qui, à travers des fentes de déplacement (26), sortent des joues latérales (14) de la région (10) faisant saillie par rapport à la tête de déplacement (5) et qui sont saisis par-dessous par les prolongements (29) des ailes de l'étrier d'une manière telle que, lors du pivotement de l'étrier dans le sens du dégagement du coincement entre le rouleau de commande (6) et la tige (3), la pièce de serrage (11) puisse pivoter en même temps depuis la position de serrage jusqu'à une position de dégagement.

9. Etai selon l'une des revendications 1 à 8, dans lequel un organe manuel de déplacement en forme de levier (13) est disposé sur l'organe de guidage (8), caractérisé par le fait que l'organe manuel de déplacement (13) est fixé d'une manière amovible, et en particulier fixé par emboîtement.

10. Etai selon la revendication 1 ou 3, caractérisé par le fait qu'une pièce de serrage (11) en forme de coin est maintenue en pouvant coulisser dans le sens longitudinal, parallèlement à la tige mobile (3), dans l'intervalle situé entre l'extrémité de la tête de déplacement (5) qui est opposée au tube d'appui (1) et la paroi de la tige mobile (3).

11. Etai selon la revendication 10, caractérisé par le fait que l'une des extrémités d'un ressort en forme d'étrier est maintenue sur l'extrémité de la pièce de serrage (11) qui s'élargit en forme de coin, son autre extrémité étant maintenue au voisinage du rouleau de commande (6), et par le fait que le ressort en forme d'étrier peut être forcé à l'encontre de sa force élastique depuis une position de serrage dans laquelle la pièce de serrage (11) est forcée dans l'intervalle de serrage et dans laquelle le ressort en forme d'étrier entoure à distance la tête de déplacement en formant un arc, jusque dans une position de dégagement dans laquelle la pièce de serrage (11) est retirée de l'intervalle de serrage et le ressort en forme d'étrier est approché de la tête de déplacement d'une manière telle que la distance entre l'extrémité maintenue fixe de l'étrier et la zone de maintien de la pièce de serrage soit plus grande que dans la position de serrage.
